Europäisches Patentamt

European Patent Office

Office européen des brevets

(19)

(11) Veröffentlichungsnummer: **0 004 307**
**B1**

(12) **EUROPÄISCHE PATENTSCHRIFT**

(45) Veröffentlichungstag der Patentschrift: **11.08.82**

(51) Int. Cl.³: **H 04 M 3/56,** H 04 Q 11/04

(21) Anmeldenummer: **79100652.1**

(22) Anmeldetag: **05.03.79**

(54) Verfahren zur Herstellung von Konferenzverbindungen in einem PCM-Zeitmultiplexvermittlungssystem.

(30) Priorität: **16.03.78 DE 2811466**

(43) Veröffentlichungstag der Anmeldung:
**03.10.79 Patentblatt 79/20**

(45) Bekanntmachung des Hinweises auf die Patenterteilung:
**11.08.82 Patentblatt 82/32**

(84) Benannte Vertragsstaaten:
**CH FR GB IT NL SE**

(56) Entgegenhaltungen:
**FR - A - 2 334 244**
**US - A - 3 984 643**
**US - A - 4 119 807**

(73) Patentinhaber: **SIEMENS AKTIENGESELLSCHAFT**
**Berlin und München**
**Postfach 22 02 61**
**D-8000 München 22 (DE)**

(72) Erfinder: **Zeiträg, Rolf, Dipl.-Phys.**
**Dompfaffweg 3**
**D-8000 München 82 (DE)**

Courier Press, Leamington Spa, England.

## Verfahren zur Herstellung von Konferenzverbindungen in einem PCM-Zeitmultiplexvermittlungssystem

Die Erfindung betrifft ein Verfahren zur Herstellung von Konferenzverbindungen in einem PCM-Zeitmultiplexvermittlungssystem, demgemäß aus von den Konferenzteilnehmern gelieferten PCM-Worten unter Bildung von Zwischensummencodeworten, die in einem Konferenzspeicher zwischengespeichert und jeweils mit Auftreten eines neuen von einem Konferenzteilnehmer gelieferten PCM-Wortes ausgelesen, daraufhin zu diesem PCM-Wort addiert und als neues Zwischensummencodewort wieder eingespeichert werden, Gesamtsummencodeworte gebildet werden, die im nachfolgenden Pulsrahmen während der den Konferenzteilnehmern zugeordneten Zeitlagen mehrfach ausgelesen und gegebenenfalls jeweils nach Subtraktion des betreffenden entsprechend verzögerten, im vorangegangenen Pulsrahmen aufgetretenen PCM-Wortes an die Konferenzteilnehmer ausgesendet werden, wobei zur Speicherung der Zwischensummencodeworte im Zuge der Bildung der Gesamtsummencodeworte und zur Speicherung der mehrfach auszulesenden und die Konferenzteilnehmer auszusendenden Codeworte von Pulsrahmen zu Pulsrahmen abwechselnd die eine oder die andere Hälfte des Konferenzspeichers ausgenutzt wird, und wobei die beschriebenen Vorgänge bitparallel erfolgen.

Bei einem Verfahren dieser Art erübrigt sich im Zusammenhang mit der Bildung der Zwischensummencodeworte ein außer dem Konferenzspeicher vorhandener weiterer Speicher, wie er bei einer Schaltungsanordnung Verwendung findet, bei der ebenfalls wechselweise betriebene Konferenzspeicherhälften vorhanden sind (US—PS 3 984 643). Es werden bei dem vorausgesetzten Verfahren die Speicherzellen desjenigen Teils des Konferenzspeichers, in dem die Zwischensummenbildung erfolgt, jeweils zweimal während derselben Zeitlage angesteuert, nämlich ein erstes Mal zum Auslesen des dort befindlichen Zwischensummencodewortes und dann zum zweiten Mal zum Einschreiben des neuen Zwischensummencodewortes, das aus diesem alten Zwischensummencodewort und einem weiteren von einem Konferenzteilnehmer gelieferten PCM-Wort gebildet worden ist. Wegen der durch Arbeitszeiten bedingten Laufzeitunterschiede kann es hierbei zu Störungen kommen. Auch ergeben sich dann kritische Zeitverhältnisse, wenn an einer Konferenzverbindung Konferenzteilnehmer beteiligt sind, denen direkt benachbarte Zeitkanäle zugeordnet sind. Aufgabe der vorliegenden Erfindung ist es daher, das eingangs erwähnte Verfahren derart auszugestalten, daß solche Schwierigkeiten vermieden sind.

Diese Aufgabe wird erfindungsgemäß dadurch gelöst, daß die Übergabe des sich aus der Addition ergebenden Codewortes an den Konferenzspeicher sowie die Bereitstellung des dort gespeicherten Zwischensummencodewortes für die Addition zu einem weiteren von einem Konferenzteilnehmer gelieferten Codewort jeweils über ein Zeitdifferenzen ausgleichendes Register erfolgt, daß die Speicherzellen der im Zuge der Bildung der Gesamtsummencodeworte ausgenutzten Konferenzspeicherhälfte innerhalb derselben Kanalzeitlage beim Einschreiben und beim Auslesen sowie beim Auslesen gegenüber dem Auslesen der gleichgeordneten Speicherzelle in der anderen Konferenzspeicherhälfte jeweils un wenigstens eine Bitzeitspanne versetzt angesteuert werden, und daß die Rückführung des sich aus der Addition ergebenden Codewortes an eine die Addition durchführende Addiereinrichtung unter Umgehung des zum Konferenzspeicher führenden Registers und des Konferenzspeichers selbst erfolgt, sofern Codeworte betroffen sind, die mit Konferenzteilnehmern im Zusammenhang stehen, denen direkt benachbarte Zeitkanäle zugeordnet sind.

Durch die jeweils über ein Register erfolgende Übergabe des aus dem Konferenzspeicher ausgelesenen alten Zwischensummencodewortes an die Addiereinrichtung sowie des von der Addiereinrichtung aus diesem alten Zwischensummencodewort und dem von einem weiteren Konferenzteilnehmer gelieferten PCM-Wort gebildeten neuen Zwischensummencodewortes an den Konferenzspeicher ist jeweils ein Ausgleich von Laufzeitunterschieden gewährleistet. Die um Bitzeitspannen gegeneinander versetzte Ansteuerung einer Speicherzelle des Konferenzspeichers während derselben Zeitspanne bzw. die zeitliche Versetzung des Auslesens bei gleichgeordneten Speicherzellen bei beiden Konferenzspeicherteilen verhindert, daß sich Schreib- und Lesevorgänge bei derselben Speicherzelle bzw. Lesevorgänge zum selben Ausgang hin zeitlich überlappen. Dabei ist durch die erfindungsgemäß vorgesehene Möglichkeit, den Konferenzspeicher zu umgehen, sichergestellt, daß die erwähnten Maßnahmen dann wenn die PCM-Worte der beteiligten Konferenzteilnehmer in direkt benachbarten Zeitkanälen auftreten, nicht zu Zeitverhältnissen führen, bei denen ein ordnungsgemäßer Betrieb nicht mehr möglich wäre. Wurden nämlich in einem solchen Falle die Zwischensummencodeworte von Konferenzspeicher aus wieder an die Addiereinrichtung gegeben, dann könnten sie nicht, wie erforderlich, gleichzeitig mit dem vom nächstfolgenden Konferenzteilnehmer gelieferten PCM-Wort, zu dem sie addiert werden sollen, zur Verfügung stehen.

Gemäß weiterer Ausgestaltung der Erfindung wird auch bei direkter Rückführung eines sich aus der Addition ergebenden Codewortes an die Addiereinrichtung dieses Codewort außerdem wie im Normalfall dem Konferenzspeicher zugeführt, jedoch nachfolgend nicht mehr ausgelesen sondern beim Einschreiben eines weiteren Codewortes in die betreffende Speicherzelle überschrieben. Aufgrund dieser Maßnahme sind außer der Schaltung des erwähnten Kurzweges keine weiteren Steuerungsmaßnahmen im Falle solcher Konferenzverbindungen zwischen direkt benachbarte Zeitkanäle belegenden Konferenzteilnehmern erforderlich, wie es sich auch erübrigt, das Gesamtsummencodewort, das ja in jedem Falle in den Konferenzspeicher gelangen muß, um von dort aus an die Konferenzteilnehmer weitergegeben zu werden, steuerungsmäßig gesondert zu behandeln.

Gemäß noch einer anderen Ausgestaltung der Erfindung wird jeweils in einen den Paaren gleichgeordneten Speicherzellen der beiden Konferenzspeicherhälften beim Einschreiben eines PCM-Wortes ein jeweils mit Beginn eines neuen Pulsrahmens in seinem Wert wechselndes Bit eingetragen, es wird ferner dieses Bit zusammen mit dem zugehörigen PCM-Wort ausgelesen und mit dem entsprechenden für den gerade vorliegenden Pulsrahmen gültigen Bit verglichen und es wird schließlich im Falle einer hierbei festgestellten Ungleichheit das während der Zeitlage dieser Ansteuerung von einem Konferenzteilnehmer gelieferte PCM-Wort ohne einer Addition unterzogen zu werden, an den Konferenzspeicher weitergegeben. Aufgrund dieser Maßnahme kann in einfacher Weise der Forderung Rechnung getragen werden, daß die PCM-Worte des in der Reihenfolge innerhalb eines Pulsrahmens ersten Konferenzteilnehmers einer Konferenzverbindung nicht zu einer alten Zwischensumme addiert werden dürfen, da diese aus im jeweils vorangegangenen Pulsrahmen aufgetretenen PCM-Worten zusammengesetzt ist und auch ein PCM-Wort dieses Teilnehmers schon enthält.

Nachstehend wird die Erfindung anhand von 2 Figuren näher erläutert.

Die Figur 1 zeigt das Blockschaltbild einer Schaltungsanordnung zur Durchführung des erfindungsgemäßen Verfahrens.

Die Figur 2 zeigt einen die zeitlichen Verhältnisse beim Betrieb der Schaltungsanordnung gemäß Figur 1 veranschaulichenden Taktplan.

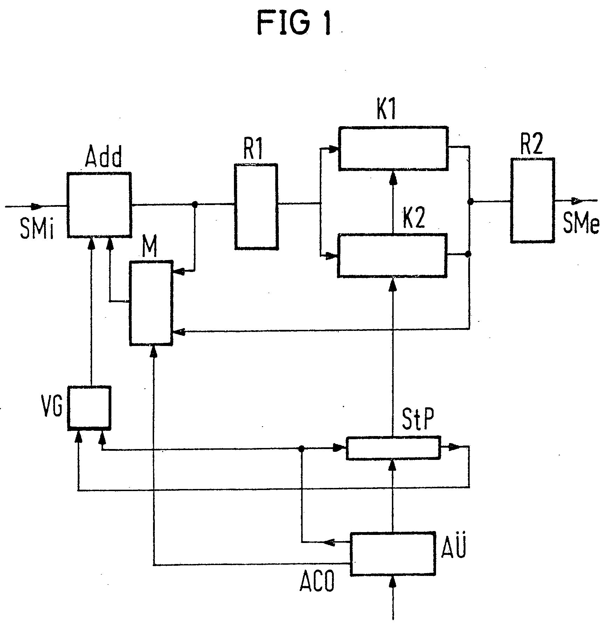

In der Figur 1 ist eine Anordnung zur Herstellung von Konferenzverbindungen insoweit dargestellt, als damit aus von den Konferenzteilnehmern gelieferten PCM-Worten Zwischensummencodeworte bzw. schließlich Gesamtsummencodeworte gebildet werden. Sofern angenommen werden kann, daß die Raumgeräusche bei den einzelnen Konferenzteilnehmern ausreichend gering sind, ist es möglich, die solcherart gebildeten Gesamtsummencodeworte den Konferenzteilnehmern direkt zuzusenden. Üblicherweise wird jedoch von den Gesamtsummencodeworten vor deren Aussendung an einen Konferenzteilnehmer der Summenanteil, den dieser Konferenzteilnehmer geliefert hat, subtrahiert. Nachfolgend wird eine solche Subtraktion jedoch nicht berücksichtigt, da die aufgezeigten Probleme, die das erfindungsgemäße Verfahren vermeidet, ausschließlich mit der Bildung von Zwischensummencodeworten und Gesamtsummencodeworten zusammenhängen.

Der dargestellten Schaltungsanordnung werden die von den einzelnen Konferenzteilnehmern gelieferten PCM-Worte in Paralleldarstellung auf einer Supermultiplexleitung SMi zugeführt, auf der beispielsweise 512 Zeitlagen gebildet sind. Die PCM-Worte sind vorher in nicht dargestellter Weise einer Umwandlung von nichtlinearer Codedarstellung in lineare Codedarstellung unterworfen worden.

Sie gelangen von dort an den Eingang I1 einer Addiereinrichtung Add. Das von dieser Addiereinrichtung an deren Ausgang abgegebene Ergebnis wird einem ersten Register R1 zugeführt, das eine Verzögerung von wenigstens einer Bitzeitspanne bewirkt. Von dort gelangt das erwähnte Codewort in eine der betreffenden Konferenzverbindung zugeordnete Speicherzelle entweder des Teils K1 oder des Teils K2 eines Konferenzspeichers. Die Konferenzspeicherteile weisen jeweils 256 solcher Speicherzellen auf entsprechend den bei der angenommenen Anzahl von 512 Zeitlagen höchstens gleichzeitig möglichen 256 Konferenzverbindungen. Die Aufnahmefähigkeit der beiden Konferenzspeicherhälften K1 und K2 für über das Register R1 angelieferte Codeworte wechselt von Pulsrahmen zu Pulsrahmen und wird durch ein entsprechendes Einschreibfreigabesignal bestimmt.

Die Ausgänge der beiden Konferenzspeicherhälften sind einerseits an den Eingang eines Registers R2 angeschlossen, dessen Ausgang mit der Supermultiplexleitung SMe für abgehende Übertragungsrichtung in Verbindung steht, andererseits sind sie an den Eingang eines Multiplexers M angeschlossen. Der andere Eingang dieses Multiplexers steht mit dem Ausgang der erwähnten Addiereinrichtung Add in Verbindung. Er ist genauso wie die Register R1 und R2 in der Lage, eine Zeitverzögerung von wenigstens einer Bitzeitspanne herbeizuführen. Der Ausgang des Multiplexers ist mit dem zweiten Eingang der Addiereinrichtung Add verbunden. Von welchen der beiden Eingänge des Multiplexers eine Durchschaltung nach entsprechender Zwischenspeicherung an dessen Ausgang erfolgt, hängt von einem Steuersignal ACO ab, auf das nachstehend noch eingegangen wird.

Jedem Paar gleichgeordneter Speicherzellen der Konferenzspeicherteile K1 und K2 ist ein zusätzlicher Speicherplatz zugeordnet, in dem aus nachstehend noch näher erläuterten Gründen ein von Pulsrahmen zu Pulsrahmen seinen Wert wechselndes Bit gespeichert wird. Die Gesamtheit dieser zusätzlichen Speicherplätze ist hier in Form eines Steuerspeichers StP mit 256 Speicherplätzen dargestellt.

Die Ansteueradressen für den Konferenzspeicher bzw. für den Steuerspeicher StP werden von einem hier nicht dargestellten Haltespeicher geliefert und an eine Einrichtung AÜ zur Adreßübernahme geliefert.

Diese Einrichtung sorgt dafür, daß eine Ansteueradresse innerhalb einer Zeitlage jeweils zweimal mit einem Zeitabstand von hier 3 Taktzeitspannen, d.h. hier 1,5 Bitzeitspannen auftritt.

Diese Einrichtung AÜ liefert auch das erwähnte Signal ACO für den Multiplexer M. Darüber hinaus gibt sie während jeder Zeitlage das erwähnte von Pulsrahmen zu Pulsrahmen wechselnde Bit einerseits an den Steuerspeicher StP andererseits an die Addiereinrichtung Add ab, worauf später noch eingegangen wird.

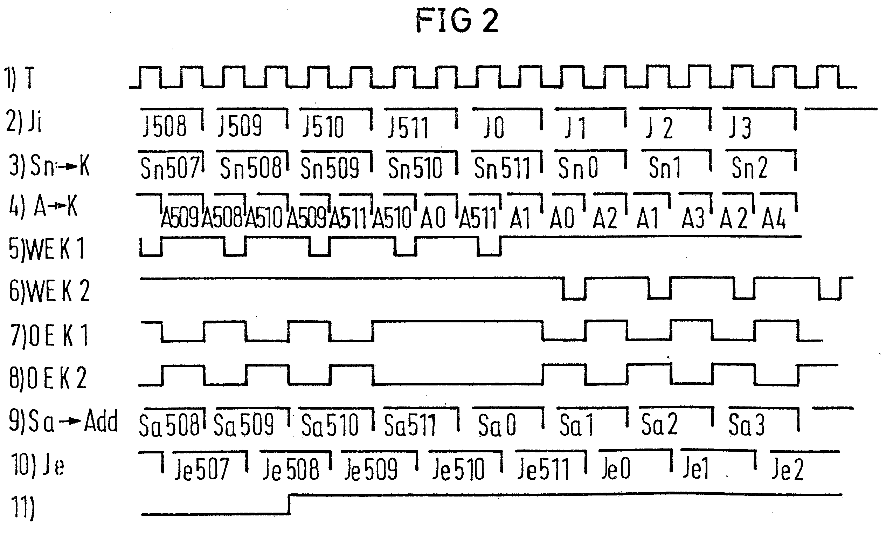

Nachstehend wird die Funktionsweise der Schaltungsanordnung gemäß Figur 1 und damit das erfindungsgemäße Verfahren unter weiterer Bezugnahme auf den Taktplan gemäß Figur 2 näher erläutert.

Die Zeile 1) der Figur 2 zeigt den Bittakt T, der dem betrachteten Zeitmultiplexfernmeldenetz zugrunde liegt, und hier 8 MHz betragen soll. Die Zeile 2) zeigt die Folge der von den Konferenzteilnehmern auf der Supermultiplexleitung SMi angelieferten Informationen. Die Zeile 3) zeigt die Folge der vom Register R1 aus an einen der beiden Konferenzspeicherteile K1 und K2 gelieferten, durch die Addiereinrichtung Add gebildeten Summencodeinformationen. Die Zeile 4) zeigt die Zeitdauer und Zeitlage der Übergabe der Ansteueraddressen an den Konferenzspeicher. Die Zeile 5) und 6) zeigen die zeitliche Lage der Einschreibsteuersignale für die Konferenzspeicherteile K1 und K2. Die Zeilen 7) und 8) zeigen die Auslesesteuersignale für die beiden Konferenzspeicherhälften K1 und K2. Die Zeile 9) zeigt die zeitliche Folge der Übergabe von im Multiplexer M zwischengespeicherten Summencodeworten an die Addiereinrichtung. Die Zeile 10) zeigt die Zeitverhältnisse bei der Aussendung der Gesamtsummencodeworte auf der Supermultiplexleitung für abgehende Übertragungsrichtung. Die Zeile 11) zeigt den von Pulsrahmen zu Pulsrahmen wechselnden Wert des in den zusätzlichen Speicherplätzen StP gespeicherten Bits.

Es wird hier die von einem Konferenzteilnehmer auf der Supermultiplexleitung SMi für ankommende Übertrangungsrichtung in der dort gebildeten Zeitlage mit der Zeitlagennummer 509 gesendete Information, also die Information I509 betrachtet. Es wird hierbei angenommen, daß es sich bei dem diese Information liefernden Konferenzteilnehmer nicht um den innerhalb eines Pulsrahmens in der Reihenfolge ersten Teilnehmer der betrachteten Konferenzverbindung handelt. Die Ansteuerung des Speicherplatzes im Steuerspeicher StP, der den beiden Speicherzellen in den beiden Teilen K1 und K2 des Konferenzspeichers zugeordnet ist, ergibt daher die Ausgabe eines Bits, dessen Wert mit dem Wert des den gerade vorliegenden Pulsrahmen kennzeichnenden Bits überinstimmt. Die Durchführung dieses Vergleichs ist in der Figur 1 durch eine Verbindung zwischen der Einrichtung AÜ, die das den aktuellen Pulsrahmen kennzeichnende Bit liefert sowie eines Ausgangs des Steuerspeichers StP mit einem Vergleich VG angedeutet.

Aufgrund dieses positiven Vergleichsergebnisses wird die Addiereinrichtung Add wirksam geschaltet, so daß die Information I509, siehe Zeile 2) zu den Informationen Sa509, siehe Zeile 9) erfolgen kann, die aus dem Speicher des Multiplexers M übernommen wird. Bei dieser Information SA509 handelt es sich um die vorher aus den von anderen Konferenzteilnehmern gelieferten PCM-Wörtern gebildete Zwischensumme, die zwischenzeitlich im vorliegenden Falle im Teil K1 des Konferenzspeichers abgespeichert war und danach, siehe das Auftreten der Adresse A509 in Zeile 4) aus diesem Konferenzspeicherteil ausgelesen und in den Speicher des Multiplexers M übernommen wurde. Der Speicher des Multiplexers M ist außer den Registern R1 und R2 ein weiteres dem Zeitausgleich dienendes Register.

Die erwähnte durch die Addiereinrichtung erzeugte Summe wird anschließend in das Register R1 übergeben. Beim nachfolgenden zweitmaligen Auftreten der Adresse A509, siehe Zeile 4) der Figur 2 gelangt sie in die entsprechende Zeile des Konferenzspeichers und zwar wegen des während des betrachteten Pulsrahmens nur an der Konferenzspeicherhälfte K1 anliegenden Schreibsignals, siehe Zeile 5) der Figur 2 in diese Hälfte des Konferenzspeichers.

Dieses zweitmalige Auftreten der Adresse A509, das wie erwähnt, in beiden Konferenzspeicherteilen zur Ansteuerung einer Speicherzelle führt, bewirkt wegen des gleichzeitig im betrachteten Pulsrahmen an der Speicherhälfte K2 anliegenden Lesesignals, siehe Zeile 8) der Figur 2 das Auslesen eines Summencodewortes aus der die betrachtete Konferenz betreffende Speicherzelle dieses Konferenzspeicherteils. Es handelt sich hierbei um das im vorangegangenen Pulsrahmen gebildete Gesamtsummencodewort, das nunmehr an das Register R2 gelangt und, wie Zeile 10) der Figur 2 zeigt, zeitlich verzögert auf die Supermultiplexleitung SMe für abgehende Übertragungsrichtung gegeben und damit dem Konferenzteilnehmer zugesendet wird, dem die Zeitlage 509 zugeteilt ist.

Mit dem Auftreten von PCM-Worten weiterer Konferenzteilnehmer, als die hier nur noch solche in Frage kommen, denen die Zeitlagen 510 und 511 zugeordnet sind, wiederholen sich die beschriebenen Vorgänge, d.h. diese PCM-Worte werden zu den im Konferenzspeicherteil K1 gespeicherten alten Zwischensummencodeworten addiert und als neues Summencodewort bzw., sofern keine weiteren Kon-

ferenzteilnehmer während des betrachteten Pulsrahmens folgen, als Gesamtsummencodewort in den Konferenzspeicherteil K1 eingeschrieben. Gleichzeitig wird während der betreffenden Zeitlagen wiederholt das alte, während des vorangegangenen Pulsrahmens gebildete Gesamtsummencodewort aus dem Konferenzspeicherteil K2 an das Register R2 bzw. an die Supermultiplexleitung SMe gegeben.

Vor der Weitergabe des Gesamtsummencodewortes auf der Supermultiplexleitung SMe kann, wie angedeutet, gegebenenfalls eine Subtraktion des Konferenzanteils desjenigen Teilnehmers vorgenommen werden, an den das Gesamtsummencodewort gerade gesendet werden soll, zu welchem Zweck diese Konferenzanteile jeweils eine eine Verzögerung von einem Pulsrahmen bewirkende Verzögerungseinrichtung zu durchlaufen haben und dann gemeinsam mit dem Gesamtsummencodewort einer Subtrahiereinrichtung zugeführt werden.

Wie der Vergleich der Zeilen 5) und 6) der Figur 2 zeigt, tritt zu Beginn des nachfolgenden Pulsrahmens ein Wechsel des Einschreibsignals bei den beiden Teilen K1 und K2 des Konferenzspeichers ein, d.h. nunmehr wird lediglich in den Teil K2 des Konferenzspeichers eingeschrieben. Der Konferenzspeicherteil K1 hingegen nimmt nunmehr die Stellung ein, die der Konferenzspeicherteil K1 innehatte, d.h. es werden die dort gespeicherten, im vorangegangenen Pulsrahmen gebildeten Gesamtsummencodeworte jeweils während der Zeitlagen der betreffenden Konferenzteilnehmer mehr-fach an das Register R2 abgegeben.

Es sei nunmehr der Fall betrachtet, daß ein PCM-Wort von dem innerhalb des betrachteten Pulsrahmens ersten Konferenzteilnehmer auf der Supermultiplexleitung SMi für ankommende Übertragungsrichtung angeliefert wird. Wie vorstehend beschrieben, ist kurz vorher aus der die betrachtete Konferenzverbindung betreffenden Speicherzeile eines Konferenzspeicherteils, hier des Konferenzspeicherteils K2 ein Summencodewort ausgelesen und an den Speicher des Multiplexers M übergeben worden. Es handelt sich hier jedoch um ein Gesamtsummencodewort, das nicht zu dem erwähnten PCM-Wort des ersten Konferenzteilnehmers addiert werden darf. Gleichzeitig wurde auch das entsprechende Bit aus dem Steuerspeicher StP ausgelesen, das nach den vorstehenden Erläuterungen einen Wert aufweist, der den vorangegangenen Pulsrahmen kennzeichnet. Ein Vergleich dieses Bits mit dem von der Einrichtung AÜ abgegebenen, den gerade vorliegenden Pulsrahmen kennzeichnenden Bit ergibt also eine Ungleichheit, mit der Folge, daß die Addiereinrichtung Add das PCM-Wort des ersten Konferenzteilnehmers unbeeinflußt an das Register R1 weitergibt. Das von der Einrichtung AÜ abgegebene, den augenblicklichen Pulsrahmen kennzeichnende Bit wird gleichzeitig mit dem Eintrag des PCM-Wortes des ersten Konferenzteilnehmers in den Konferenzspeicherteil K2 in den entsprechenden Speicherplatz des Steuerspeichers StP eingetragen. Dies hat zur Folge, daß bei allen Vergleichen, die im Zusammenhang mit dem Auftreten weiterer die betrachtete Konferenz betreffender PCM-Worte innerhalb dieses Pulsrahmens durchgeführt werden, eine Übereinstimmung festgestellt wird, so daß, wie für den vorangegangenen Pulsrahmen beschrieben, nunmehr die ankommenden PCM-Worte immer zu einem aus dem Konferenzspeicherteil K2 ausgelesenen Zwischensummencodewort addiert werden und damit neue Zwischensummencodeworte gebildet werden.

Wenn an derselben Konferenz Konferenzteilnehmer beteiligt sind, denen zeitlich direkt benachbarte Zeitlagen zugeordnet sind, dann wäre es nicht möglich, über den beschriebenen Weg, also über das Register R1, einen der Speicherteile K1 und K2 und über den Speicher des Multiplexers M geleitete Zwischensummencodeworte wieder rechtzeitig am entsprechenden Eingang der Addiervorrichtung Add zur Verfügung zu stellen.

Gemäß einem Merkmal der Erfindung wird daher dann, wenn zwei in benachbarten Zeitlagen gelieferte Ansteueraddressen für den Konferenzspeicher K1, K2 bzw. für den Steuerspeicher StP übereinstimmen, ein Kurzweg geschaltet, indem aufgrund eines von der Einrichtung AÜ abgegebenen Signals ACO der mit dem Ausgang der Addiereinrichtung Add verbundene Eingang des Multiplexers M wirksam geschaltet wird. Das von der Addiereinrichtung abgegebene Codewort gelangt also ohne die Verzögerung durch das Register R1 und durch den Konferenzspeicher K1, K2 direkt in den Speicher des Multiplexers M und steht dann mit Auftreten des während der nachfolgenden Zeitlage angelieferten PCM-Wortes des nächsten Konferenzteilnehmers der Addiervorrichtung zur Verfügung. Gleichzeitig wird das von der Addiervorrichtung abgegebene Codewort aber auch auf dem üblichen Weg an den Konferenzspeicher gegeben, allerdings von dort aus nicht wie üblich später wieder zum Multiplexer M hin ausgelesen, da dessen entsprechender Eingang zur betreffenden Zeit unwirksam gemacht ist. Bei Auftreten eines nachfolgenden für dieselbe Speicherzelle des Konferenzspeicherteils bestimmten Codewortes wird dieses nicht ausgelesene Zwischensummencodewort einfach überschrieben. Wenn das von einem weiteren Konferenzteilnehmer gelieferte PCM-Wort dann wieder um mehr als eine Zeitlage beabstandet auftritt, kann das Aufsummieren daher wieder in der üblichen Weise vom Konferenzspeicher aus über den Multiplexer vor sich gehen.

**Patentansprüche**

1. Verfahren zur Herstellung von Konferenzverbindungen in einem PCM-Zeitmultiplexvermittlungssystem, demgemäß aus von den Konferenzteilnehmern gelieferten PCM-Worten unter Bildung von Zwischensummencodeworten, die in einem Konferenzspeicher (K1, K2) zwischengespeichert und jeweils mit Auftreten eines neuen von einem Konferenzteilnehmer gelieferten PCM-Wortes ausgelesen, daraufhin zu diesem PCM-Wort addiert und als neues Zwischensummencodewort wieder eingespeichert werden, Gesamtsummencodeworte gebildet werden, die im nachfolgenden Pulsrahmen während der den Konferenzteilnehmern zugeordneten Zeitlagen mehrfach ausgelesen und, gegebenenfalls jeweils nach Subtraktion des betreffenden entsprechend verzögerten, im vorangegangenen Pulsrahmen aufgetretenen PCM-Wortes, an die Konferenzteilnehmer ausgesendet werden, wobei zur Speicherung der Zwischensummencodeworte im Zuge der Bildung der Gesamtsummencodeworte und zur Speicherung der mehrfach auszulesenden und an die Konferenzteilnehmer auszusenden Codeworte von Pulsrahmen zu Pulsrahmen abwechselnd die eine oder die andere Hälfte des Konferenzspeichers ausgenutzt wird und wobei die beschriebenen Vorgänge bit-parallel erfolgen, dadurch gekennzeichnet, daß die Übergabe des sich aus der Addition ergebenden Codewortes an den Konferenzspeicher (K1, K2) sowie die Bereitstellung des dort gespeicherten Zwischensummencodewortes für die Addition zu einem weiteren von einem Konferenzteilnehmer gelieferten Codewort jeweils über ein Zeitdifferenzen ausgleichendes Register (R1, M) erfolgt, daß die Speicherzellen der im Zuge der Bildung der Gesamtsummencodeworte ausgenützten Konferenzspeicherhälfte (K1 oder K2) innerhalb derselben Kanalzeitlage beim Einschreiben und beim Auslesen sowie beim Auslesen gegenüber dem Auslesen der gleichgeordneten Speicherzelle in der anderen Konferenzspeicherhälfte (K2 oder K1) jeweils um wenigstens eine Bitzeitspanne versetzt angesteuert werden, und daß die Rückführung des sich aus der Addition ergebenden Codewortes an eine die Addition durchführende Addiereinrichtung (Add) unter Umgehung des zum Konferenzspeicher führenden Registers (R1) und des Konferenzspeichers (K1, K2) selbst erfolgt, sofern Codeworte betroffen sind, die mit Konferenzteilnehmern im Zusammenhang stehen, denen direkt benachbarte Zeitkanäle zugeordnet sind.

2. Verfahren nach Anspruch 1, dadurch gekennzeichnet, daß auch bei direkter Rückführung eines sich aus der Addition ergebenden Codewortes an die die Addition durchführende Addiereinrichtung (Add) dieses außerdem dem Konferenzspeicher (K1, K2) zugeführt, jedoch nachfolgend nicht mehr ausgelesen sondern beim Einschreiben eines weiteren Codewortes in die betreffende Speicherzelle überschrieben wird.

3. Verfahren nach Anspruch 1 oder 2, dadurch gekennzeichnet, daß in den Paaren gleichgeordneter Speicherzellen der Konferenzspeicherhälften (K1, K2) individuell zugeordneten Speicherplätzen (StP) beim Einschreiben eines PCM-Wortes ein mit Beginn eines neuen Pulsrahmens seinen Wert wechselndes Bit eingetragen wird, daß dieses Bit zusammen mit dem zugehörigen PCM-Wort ausgelesen und mit dem entsprechenden für den gerade vorliegenden Pulsrahmen gültigen Bit verglichen wird, und daß im Falle einer hierbei festgestellten Ungleichheit das während der Zeitlage dieser Ansteuerung von einem Konferenzteilnehmer gelieferte PCM-Wort, ohne einer Addition unterzogen zu werden, an den Konferenzspeicher (K1, K2) weitergegeben wird.

## Revendications

1. Procédé pour établir des liaisons de téléconférence dans un système de communications multiplex à répartition dans le temps et à modulation par impulsions et codage (MIC), du type dans lequel, à chaque apparition d'un nouveau mot (MIC) fourni par un participant à la conférence, on lit des mots de code de somme intermédiaire qui sont formés à partir des mots (MIC) fournis par les participants et qui sont mémorisés temporairement dans des mémoires de conférence (K1, K2), on y ajoute ledit nouveau mot (MIC) et on forme de nouveaux mots de code de somme intermédiaire qui sont lus à plusieurs reprises dans la trame d'impulsions suivante, pendant des tranches de temps associées aux participants à la conférence, et sont émis à ces derniers, éventuellement après soustraction du mot (MIC) concerné, retardé de façon correspondante et apparaissant dans la trame d'impulsions antérieure, du type dans lequel, en vue de la mémorisation des mots de code de somme intermèdiaire et dans le cours de la formation des mots de code de somme totale, de même que pour la mémorisation des mots de code à lire à plusieurs reprises et à émettre aux participants à la conférence, on utilise, de trame d'impulsions en trame d'impulsions, alternativement l'une ou l'autre des moitiés de la mémoire de conférence, et dans lequel les opérations sus-dites sont effectuées en parallèle par bit, caractérisé par le fait que la transmission à la mémoire de conférence (K1, K2) du mot de code qui résulte de l'addition, de même que la mise à la disposition du mot de code de somme intermédiaire qui y est mémorisé, en plus de son addition avec un autre mot de code fourni par un participant à la conférence, a lieu par l'intermédiaire d'un registre (R1, M) compensant les différences dans le temps, que les cellules de mémoire de la moitié de la mémoire de conférence (K1 ou K2) utilisées pour la formation des mots de code de source totale sont attaquées pendant la même tranche de temps, à l'écriture et à la lecture de même que lors de la lecture par rapport à la lecture de la cellule de mémoire de même ordre dans l'autre moitié de la mémoire de conférence (K2 ou K1) respectivement avec un décalage au moins égal à la durée d'un bit, et que le renvoi du mot de code qui résulte de l'addition à un dispositif additionneur (Add) réalisant l'addition, a lieu, en contournant le registre (R1) menant à la mémoire de conférence et la mémoire de conférence elle-même, dans la mesure où des mots de code sont concernés qui sont en relation avec des participants à la conférence et auxquels sont associées des tranches de temps directement voisines.

2. Procédé selon la revendication 1, caractérisé par le fait qu'également dans le cas du retour direct d'un mot de code résultant d'une addition, le dispositif additionneur (Add) réalisant l'addition, ce mot de code est en outre appliqué à la mémoire de conférence (K1, K2), toutefois il n'est pas ensuite lu, mais il est recouvert par un autre mot de code dans la cellule de mémoire concernée.

3. Procédé selon la revendication 1 ou 2, caractérisé par le fait que dans les paires de cellules de même ordre, des moitiés de mémoire de conférence (K1, K2) est resté introduit dans des emplacements de mémoire (StP) individuellement en coordonnées, lors de l'inscription d'un mot (MIC), un bit qui change de valeur avec le début d'une nouvelle trame d'impulsions, que ce bit et le mot (MIC) associé sont lus en même temps et sont comparés avec le bit correspondant qui est valable pour la trame d'impulsions présente à ce moment, et que dans le cas d'une inégalité constatée, le mot (MIC) fourni par un participant à la conférence pendant cette tranche de temps de cette attaque, est transmis à la mémoire de conférence (K1, K2) sans être soumis à une addition.

## Claims

1. Method for the establishment of conference connections in a PCM t.d.m. exchange system, in accordance with which, by means of the formation of intermediate sum code words which are intermediately stored in a conference store (K$_1$, K$_2$), read out on the occurrence of a new PCM word supplied by a conference subscriber, subsequently added to this PCM word and are re-input as a new intermediate sum code word, on the basis of the PCM words supplied by the conference subscribers, there are formed overall sum code words which, in the following pulse frame, during the time slots assigned to the conference subscribers are repeatedly read out and, possibly following the subtraction of the particular, appropriately delayed PCM word which has occurred in the previous pulse frame, are transmitted to the conference subscribers, wherein alternately from pulse frame to pulse frame either the one or the other half of the conference store is used to store the intermediate sum code words in the course of the formation of the overall sum code words and to store the code words which are to be repeatedly read out and are to be transmitted to the conference subscribers, and within which the described operations take place in bit parallel fashion, characterised in that the transfer of the code word, formed as a result of the addition, to the conference store (K1, K2) and the production of the intermediate sum code word stored therein for the addition to a further code word supplied by a conference subscriber, takes place via a register (R1, M) which serves to compensate time differences, that the storage cells of the half of the conference store (K1 or K2) which is used during the course of the formation of the overall sum code words within the same channel time slot are operated with a delay of at least one bit time interval during write-in and read-out and, in the case of read-out, in relation to the read-out of the equivalent storage cell within the other half of the conference store (K2 or K1), and that the return of the code word which results from the addition operation to an adder (Add) which executes the addition takes place by by-passing the register (R1) which leads to the conference store, and the conference store (K1, K2) itself if the code words in question relate to conference subscribers which are assigned directly adjacent time channels.

2. Method as claimed in claim 1, characterised in that even in the event of the direct return of a code word resulting from an addition operation to the adder (Add) which executes the addition, this word is additionally supplied to the conference store (K1, K2) whereupon, however, it is no longer read out but is overwritten in the event of the input of a further code word into the storage cell in question.

3. Method as claimed in claim 1 or 2, characterised in that in the event of the input of a PCM word, a bit, which changes its value at the beginning of a new pulse frame, is entered into storage positions (StP) respectively assigned to the pairs of equivalent storage cells within the two halves (K1, K2) of the conference store, that this bit is read out together with the associated PCM word and is compared with the corresponding bit which relates to the pulse frame in question, and that in the event that non-identity is thereby established the PCM word which has been supplied during the time slot of this operation by a conference subscriber is forwarded to the conference store (K1, K2) without being subjected to addition.

# FIG 1

FIG 2